# EUROPEAN PATENT APPLICATION

(11) **EP 4 310 727 A1**
(43) Date of publication of application: **24.01.2024**
(21) Application number: 22186098.4
(22) Date of filing: 20.07.2022
(51) Int. Cl.: G06N 3/04, G06N 3/08, G06V 10/82, G06V 30/412

(54) **IMPROVED ONLINE SCORING**

(71) Applicant: THESEE, 92130 Issy-Les-Moulineaux (FR)
(72) Inventor: ZYATE, Mahmoud, Casablanca (MA); BENTAHAR, Hamza, Casablanca (MA); ALAMI, Youssef, Casablanca (MA)
(74) Representative: Rogiest, Wouter

(57) **Abstract**

The invention provides, amongst other aspects, a computer-implemented method for detecting characteristic physical data values, the method comprising the steps of: receiving physical entity data; extracting at least two respective physical data values from the physical entity data; determining respective numerical vectors of the respective physical data values by means of a trained neural network; determining respective characteristic scores based on the respective numerical vectors; selecting characteristic physical data values from said respective physical data values, the selection being based on their respective characteristic scores; returning a result comprising said respective characteristic physical data values, preferably along with their respective characteristic scores; wherein said extracting comprises partitioning the physical entity data into the respective physical data values.

## Description

### Field of the invention

The present invention relates to the technical domain of attributing a score to physical entity data, particularly to detecting characteristic physical data values, such as text and images, present within physical entity data.

### Background art

In recent times, automated processing of data has drastically gained importance owing to advancements in machine learning and deep learning. Related, the abundance of data has led to a tremendous need for automated data detection and processing for industrial applications. Thereby, natural language processing plays an important role.

EP4002296A1, US2021357588A1 and US2021166136A1 disclose related methods but are overly complex and/or are not well adapted to the requirements of detecting characteristic physical data values within data.

The present invention aims at addressing issues inherent to scoring, such as the issues mentioned above.

### Summary of the invention

According to a first aspect, the present invention provides a computer-implemented method for detecting characteristic physical data values, the method comprising the steps of:
- receiving physical entity data;
- extracting at least two respective physical data values from the physical entity data;
- determining respective numerical vectors of the respective physical data values by means of a trained neural network;
- determining respective characteristic scores based on the respective numerical vectors;
- selecting characteristic physical data values from said respective physical data values, the selection being based on their respective characteristic scores;
- returning a result comprising said respective characteristic physical data values, preferably along with their respective characteristic scores;
wherein said extracting comprises partitioning the physical entity data into the respective physical data values.

Herein, the detecting may relate to "singling out" of those physical data values that best match a characteristic that is to be detected. Thereby, the characteristic may be straightforward, such as whether a human is present on an image, or whether a text string relates to tennis. However, the relevant characteristic may be anything that can be automatically inferred from the physical entity data, and may, e.g., relate to a human activity or technical domain, such as R&D activity. In embodiments, the input data may be represented as a string of data, e.g., binary data, and the result of detecting may hence be a mere pointer to a starting and stopping position of the detected matching physical data value.

The method of the invention may advantageously provide detection of "prototypical" or "representative" excerpts from the physical entity data, which "illustrate best" what matches the characteristic sought for. Thereby, in embodiments, the relative ranking of characteristic physical data values, e.g., according to descending characteristic scores, may be a further advantage in that the most "prototypical" example may appear first. The method thereby advantageously includes partitioning of input data to distinguish different physical data values, rather than considering the physical entity data as a single object to be scored.

In particularly advantageous embodiments, the method further comprises the steps of:
- determining a global numerical vector based on the respective numerical vectors, preferably directly based on the respective numerical vectors;
- calculating a global score based on the global numerical vector;
wherein said result further comprises the global score.

Such embodiments may advantageously combine scoring of the physical entity data as a single object to be scored, on the one hand, with scoring of the respective physical data values, on the other hand. By determining the global numerical vector based on the respective numerical vectors, a synergistic situation may be realized, wherein a lower or higher global score for given physical entity data may be effectively linked to lower of higher characteristic scores for the characteristic physical data values that it contains. Moreover, the computational burden for the calculation of the global score is lowered, since the global numerical vector need not be computed from scratch, but rather can be derived from "re-use" of the numerical vectors that are available. In preferred embodiments, the global numerical vector is based directly on the respective numerical vectors, whereby the calculation of the global numerical vector is a mere arithmetic calculation, e.g., through calculation of mean values for each of the real values of corresponding index positions of the numerical vectors of the characteristic physical data values. In such embodiments, a lower or higher global score for given physical entity data may be directly linked to lower of higher characteristic scores for the characteristic physical data values that it contains. Another advantage may lie in the modular nature of this principle, wherein first physical entity data and second physical entity data may be, in their turn, compared as a whole.

This may relate to embodiments wherein the method is applied to each of said physical entity data and second physical entity data, and wherein the method comprises the further step of:
- selecting one of said physical entity data and said second physical entity data based on the global score of said physical entity data and a second global score of said second physical entity data.

Such embodiments may advantageously allow for a hierarchical approach, wherein the global numerical vectors of the first and second physical entity data are "first level" numerical vectors that may be used for determining a "second level" numerical vector and an associated "second level" score. This principle may be used for any number of levels, e.g., two, three, four or more than four, and may advantageously allow to "reuse" numerical vectors used for lower levels for higher levels, thereby reducing computational complexity and/or allowing for improved insight in the functioning of the scoring mechanism.

According to a second aspect, the invention provides a device comprising a processor and memory comprising instructions which, when executed by said processor, cause the device to execute the method according to the invention.

According to a further aspect, the invention provides a system comprising the device according to the invention and a a user device comprising a display and connected to said device, wherein said device is further configured to:
- receiving, from the user device, the physical entity data and/or an identification of the physical entity data, preferably a URL;
- retrieving, if not received already, through downloading and/or web crawling, the physical entity data associated with said identification;
- sending the result, preferably comprising a graphical representation, to the user device; and wherein said user device is configured to:
- sending, to the device, said identification of the physical entity data, preferably the URL;
- receiving, from the device, said result;
- displaying said result on said display.

Such a system may advantageously provide a user with a remote means, e.g., a cloud service, for detection of characteristic physical data values, wherein, in embodiments, the user may provide a simple identification of the physical entity data, such as a URL. Such a system is not offered by any of EP4002296A1, US2021357588A1 and US2021166136A1, which do not disclose nor hint upon such an approach.

According to a further aspect, the invention provides a computer program product for carrying out a computer-implemented method according to the invention, which computer program product comprises at least one readable medium in which computer-readable program code portions are saved, which program code portions comprise instructions for carrying out said method.

Preferred embodiments and their advantages are provided in the description and the dependent claims.

### Brief description of the drawings

The present invention will be discussed in more detail below, with reference to the attached drawings.
Fig. 1 shows an example method according to the invention.
Fig. 2A-B show a first example set-up illustrating the invention. Thereby, Fig. 2A illustrates a first example method set-up, and Fig. 2B shows experimental results obtained therewith.
Fig. 3A-B and 4A-B show a second example set-up illustrating the invention. Thereby, Fig. 3A illustrates a second example set-up, and Fig. 3B shows experimental results obtained therewith.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "physical entity data" is an umbrella term for any data directly or indirectly representing and/or comprising data referring to physical entities. Without being limited thereto, physical entities may relate, e.g., to persons or activities or related websites or documents and/or measurement data such as time or location data or sensor data relating to, e.g., images or audio or video. The physical entity data thereby comprises at least two respective physical data values, whereby the invention relates to detecting those physical data values that are characteristic data values. The neural network of the invention may thereby be trained with respect to the type of physical data values comprised in the physical entity data, such as, e.g., text and/or images. The neural network may be of any type, but preferably relates to transformer neural networks. The neural network may thereby furthermore be trained with respect to a relevant characteristic of the physical entity data. Without being limited thereto, physical data values may relate to, e.g., any or any combination of text data and multimedia data, such as text strings, movies, audio data of movies, video data of movies, audio data of audio recordings, text strings extracted from subtitles present in movies, text strings extracted from audio data by means of speech-to-text. Thereby, the relevant characteristic may be straightforward, such as whether a human is present on an image. However, the relevant characteristic may be anything that can be automatically inferred from the physical entity data, and may, e.g., relate to a human activity. Thereby, in embodiments, a respective characteristic score may be proportional to the extent that the respective physical data value is indicative of the relevant characteristic, whereby the characteristic scores of respective physical data values may jointly contribute to an assessment of all the physical entity data, with an overall score associated with all physical data values in their connection.

In this document, the term "BERT" is short for "Bidirectional Encoder Representations from Transformers", a technique disclosed in (J. Devlin, M.-W. Chang, K. Lee, K. Toutanova, BERT: Pre-training of Deep Bidirectional Transformers for Language Understanding, v2, 2019, doi:10.48550/arXiv.1810.04805). The term "SBERT" refers to Sentence BERT. Thereby, BERT and SBERT are implemented with deep learning neural networks to create new NLP models. A "BERT-based model" thereby refers to a broad class of transformer models, including any Transformer model used for encoding, either directly or indirectly, of any digital input. A digital input may be any of a text string, a word, a sentence, a paragraph, a website, or any media data, such as an image, a video, an audio fragment, without being limited thereto. Examples of BERT-based models include BERT and Sentence BERT (SBERT), without being limited thereto. Related, in this document, "ViT" is short for "Vision Transformers", a broad class of transformer models, including any Transformer model used for encoding a digital input relating to vision, such as an image.

In embodiments with media data as digital input, a media-to-text conversion may allow a "translation-based" approach, wherein media data is treated as one or more sentences. For instance, for an image, a vector may be generated based on media-to-text and a sentence encoder, e.g., with SBERT.

In embodiments with media data as digital input, a media-to-vector conversion may allow a "direct-encoding" approach, wherein no intermediate conversion to text is required, with direct encoding from media to vector. In examples wherein the media data comprises images and/or video, the direct-encoding approach may involve ViT. For instance, for an image, a vector may be generated based on direct encoding with a ViT.

In embodiments, a combination of a "translation-based" approach and "direct-encoding" approach may apply one approach to a first group of media data, and another approach to another group of media data.

In embodiments, a combination of a "translation-based" approach and "direct-encoding" approach may be applied to at least one, or all, of the media data presented as digital input. For instance, for an image, a first vector may be generated based on media-to-text and a sentence encoder, e.g., with SBERT, along with a second vector, generated based on direct encoding, e.g., with a ViT.

In embodiments, the neural network is a transformer neural network, or, equivalently, a transformer model or transformer, preferably in the sense disclosed in (A. Vaswani et al, Attention Is All You Need, v5, 2017, doi:10.48550/arxiv.1706.03762). Such a transformer model may be particularly advantageous in its ability to efficiently learn context and track relationships in sequential data, like words in a sentence, or media data. The use of a transformer model may furthermore have the advantage of enabling efficient parallelization, which may increase calculation speed and reduce lag.

In this document, the term "URL" refers to a uniform resource locator, relating to web addresses of websites. Thereby, subsequent parts (i-v) of the URL structure are referred to as (i) scheme, such as "https" or http", (ii) subdomain (optional), (iii) second-level domain or SLD, (iv) top-level domain or TLD, such as ".com" or ".org", and (v) subdirectory (optional).

In this document, "extraction" and "extracting" is an umbrella term referring to any way of obtaining, from first data, second data, wherein the second data is at least in part based on the first data. Thereby, extracting may encompass "partitioning", relating to a form or phase of extracting wherein the second data is obtained from the first data as a literal or quasi-literal part of the first data, or be equal to the first data. Furthermore, extracting may also encompass "converting", relating to a form or phase of extracting that may involve further modifications of portions of the first data to arrive at the second data. In embodiments relating to partitioning, the first data may be a set of data files, and the second data may be a subset of files selected from the first data, with some or all files selected. In embodiments relating to partitioning, the first data may be a first text string with a plurality of sentences, and the second data may be a second text string being a selected sentence taken verbatim from the first text string, with some or all sentences selected. In embodiments relating to converting, a sentence, e.g., a sentence present as part (or partition) in first data, may be processed to arrive at a text string being a shortened or cleaned sentence, as second data. In embodiments relating to converting, an image, e.g., an image present as part (or partition) in first data, may be processed to arrive at a text string being an alt text automatically generated from the image by means of an alt text generator.

In this document, a "media-to-text operation" is an umbrella term for any type of automated processing that derives, from a portion of media data, a text string that relates to the contents of the media data. Examples of media-to-text operations are alt text generation, OCR, speech-to-text, automated subtitling, and any type of automated annotation of a portion of media data relating to audio, video, or any related visual or auditory representation. Thereby, "alt text generation" may relate to extracting physical data values from physical entity data, or to processing of physical data values after they are extracted, e.g., as part of the determining of the characteristic score, just before the numerical vector for the concerned physical data value is extracted. In embodiments, this may relate to a portion of media data comprising an image or belonging to an image, e.g., a bitmap or any other pixel map comprising an array of pixels. In embodiments, this may relate to a portion of media data comprising video data or belonging to a video, e.g., a sequence of bitmaps or any other pixel maps each comprising an array of pixels. Thereby, alt text generation may automatically generate one or more keywords relating to the scene depicted by the pixels. This may relate to, e.g.: any words or sentences describing the color or contrast of the image; any object or person detected in the scene; the physical appearance of the person; the number of persons or objects detected in the scene; the activity (e.g., tennis, or R&D) that may be suggested by the object (e.g., a tennis ball, or a microscope) or the appearance of the person or the relation between an object and a person (e.g., a person holding a tennis racket, a person peering through a microscope).

In embodiments, the numerical vectors and global numerical vector are arrays of equal length with, for each index position, a real value. This may have the advantage that calculation of the global numerical vector may be a mere arithmetic calculation, e.g., through calculation of mean values for each of the real values of corresponding index positions of the characteristic physical data values.

In embodiments, the physical entity data is a website, which is preferably relating to a relevant characteristic being a human activity or technical domain, whereby different physical data values may be indicative of whether, and to what extent, the website is characterized by the human activity. This may, e.g., relate to a detection of humans playing tennis, or to the detection example discussed in Example 1 below. In embodiments, the physical entity data is an electronic document, e.g., a pdf comprising text and images, relating to a human activity, whereby different physical data values may be indicative of whether, and to what extent, the electronic document is characterized by the human activity. In embodiments, the physical entity data is a collection of media files relating to a human activity, whereby different physical data values are different media files which may be indicative of whether, and to what extent, the collection is characterized by the human activity. In each of these example embodiments, the invention may advantageously allow to detect which of the physical data values may be characteristic physical data values with relevance in view of the activity monitored.

In embodiments, the relevant characteristic of the physical entity data relates to a physical object being present, such as a certain type of building, or a ball. In embodiments, the relevant characteristic of the physical entity data relates to a human activity. This may be any activity or domain, e.g., playing football or tennis, research and development, the energy sector, energy conservation, real estate, finance, healthcare. Below, example embodiments with research and development as activity are discussed in Example 1.

In (J. Devlin, M.-W. Chang, K. Lee, K. Toutanova, BERT: Pre-training of Deep Bidirectional Transformers for Language Understanding, v2, 2019, doi:10.48550/arXiv.1810.04805), BERT is proposed as an accurate technique for basic tasks such as Masked Language Model (MLM) and Next Sentence Prediction (NSP). While the document discloses the application of BERT for basic tasks, it does not disclose the detection of characteristic physical data values within data.

In embodiments, the physical entity data is received in the form of a URL that relates to a website, the URL comprising at least a top-level domain and a second-level domain, and wherein said at least two respective physical data values are automatically extracted from said website.

In embodiments, the number of respective extracted physical data values is at least ten, and the physical data values are automatically extracted from a subdomain and/or from a subdirectory based on the top-level domain and the second-level domain.

In embodiments, at least one of the extracted physical data values comprises a sentence present as first partition in the physical entity data; said at least one extracted physical data value being associated with a numerical vector determined based on said sentence; and wherein at least another one of the extracted physical data values comprises a media file, preferably an image, present as second partition in the physical entity data; said at least another one being associated with a numerical vector determined based on a text string obtained by processing said media file with a media-to-text operation, preferably by processing said image with automated alt text generation.

In embodiments, the determining of the respective numerical vectors comprises the sub-steps of:
- processing the respective physical data values; and
- calculating, based on the respective processed physical data values, the respective numerical vectors;
wherein, for at least one of the physical data values, the processing comprises at least one, preferably all, of: tokenizing at least one word comprised in the physical data value into syllables; applying a media-to-text operation to at least one media portion comprised in the physical data value. In related embodiments, the respective physical data values concern respective images; wherein said processing comprises, for each image, at least one of, or both of (i) alt text generation, for obtaining respective text strings, wherein the calculating of the respective numerical vectors is based on said respective text strings; and (ii) applying a ViT, for calculating the respective numerical vectors directly.

In embodiments, said determining of respective numerical vectors by means of said neural network, preferably said calculating of numerical vectors, comprises applying a sentence encoder, preferably a BERT-based model, more preferably SBERT, to respective text strings based on the respective physical data values, preferably the respective processed physical data values. The inventors have found that a BERT-based model may be particularly advantageous for detecting characteristic physical data values relating to text strings. Thereby, pre-training of deep bidirectional representations from unlabeled text is performed by jointly conditioning on both left and right context in all layers. This may advantageously allow that the pre-trained BERT-based model is fine-tuned with just one additional output layer, without substantial task-specific architecture modifications. Resource-wise, this may be advantageous, since after pretraining, which is computationally expensive yet may be done by a third party, a BERT-based model can be finetuned with less resources on smaller datasets to optimize its performance on the task of detecting characteristic physical data values.

In embodiments, said determining of the numerical vectors comprises the substeps of:
- tokenizing, with BERT tokenization, the respective text strings obtained from respective physical data values, preferably processed physical data values;
- calculating, with BERT encoding, based on the respective tokenized physical data values, the respective numerical vectors.

In embodiments, BERT tokenization relates to splitting words in syllables, preferably splitting words that are unrecognized into syllables. This may allow to feed the syllables to a next method step, whereby the syllables are processed as separate words, rather than parts of a word.

In embodiments, the determining of the respective characteristic scores based on the respective numerical vectors involves a trained classifier applying a gradient boosting algorithm. This may relate to a classifier that generates the characteristic scores. In embodiments, the determining of the global score comprises applying a gradient boosting algorithm. In embodiments, both the respective characteristic scores and the global score are determined by classifiers applying a gradient boosting algorithm, i.e., a first classifier for the characteristic scores and a second classifier for the global score. Thereby, the first and second classifier may be trained differently to suit the purpose of individual physical data value classification, on the one hand, and global classification of a plurality of physical data values, or the whole of physical entity data, on the other hand.

In embodiments, the gradient boosting algorithm relates to any or any combination of Gradient Boosting Machine (GBM), functional gradient boosting (see, e.g., (L. Mason et al, Boosting Algorithms as Gradient Descent, Adv. in Neur. Inf. Proc. Syst. 12:512-518, 1999)), Multiple Additive Regression Trees (MART), Boosted Regression Trees (BRT), XGBoost. Preferably, the method used is a combination of XGBoost and hyperparameter tuning. The inventors have found gradient boost algorithms to be accurate not only for calculating the global score, but, more importantly, also for determining the plurality of characteristic scores.

In embodiments, the method further comprises the step of:
- generating a graphical representation of said result;
- preferably, displaying said graphical representation on a graphical user interface.

In embodiments, said graphical representation comprises a display of the characteristic physical data values and a mark-up, preferably a highlighting and/or a heatmap, wherein color and/or highlighting is indicative of a weight of respective data portions of a physical data value to the characteristic score of said physical data value. In example embodiments, this may relate to a physical data value being a text string such as "our patented transmission system involves two one-directional bearings". Thereby, the words "transmission system" and "bearings" may be highlighted in a color with moderate intensity, in view of contributing to a moderate degree to the physical data value being a characteristic physical data value. Similarly, the words "our patented" may be highlighted in a color with high intensity, in view of contributing to a high degree to the physical data value being a characteristic physical data value.

In embodiments, said graphical representation comprises a display of a word cloud comprising respective words of the respective characteristic physical data values. Thereby, the size and/or color and/or position of the words may be proportional to the number of occurrences in the physical entity data and/or the number of occurrences in the processed physical entity data. Additionally, or alternatively, the size and/or color and/or position of the words may be proportional to the degree of contributing to the respective physical data value being a characteristic one.

In embodiments, the partitioning comprises at least one of: detecting interpunction for extracting a sentence consisting of text; detecting a relation between an image and a portion of text for extracting an image-text combination. Thereby, in embodiments, the portion of text relates to a caption of said image and/or metadata of said image such as EXIF information or file date or file name.

In embodiments, said selecting is based on a pre-determined criterion, said pre-determined criterion preferably relating to a pre-determined number of detected values and/or to said respective characteristic scores surpassing a pre-determined threshold. For example, the pre-determined criterion may be to return any number of characteristic physical data values: one, at least one, two, at least two, three, at least three, four, at least four, five, etc. In such examples, the invention may advantageously provide the "prototypical" or "representative" excerpts from the physical entity data, which "illustrate best" what matches the characteristic sought for. Thereby, the relative ranking of characteristic physical data values, e.g., according to descending characteristic scores, may be a further advantage in that the most "prototypical" example appears first. In other examples, the pre-determined criterion may be to return all physical data values as characteristic physical data values. In such cases, through ranking based on characteristic score, the invention may advantageously provide insights in the relevance of certain physical data values.

In embodiments, the detection of characteristic physical data values relates to a sentence encoder, wherein respective physical data values may be respective sentences, and wherein the characteristic physical data values may relate to respective sentence results. This may be further understood from Examples 1 and 2. In related embodiments, one or more, or all, of the extracted physical data values may be images. Such embodiments may still relate to a sentence encoder. This may be the case, for instance, where sentences are generated from the images, e.g., through alt text generation, and/or any form of image-to-text processing.

In embodiments, the detection of characteristic physical data values relates to a website classifier. In such embodiments, preferably, the respective physical data values are sentences, and the characteristic physical data values may relate to respective sentence results. Thereby, the website classifier may rely on a sentence encoder with the scope of performing detection with respect to a website as a whole, rather than focusing exclusively on the relative scoring of individual sentences. In view thereof, sentence encoding may be a main enabler for website classification. In related embodiments, the website to be classified comprises one or more images in addition to sentences. In other embodiments, the website consists exclusively of images. For such embodiments, a sentence encoder approach may equally be applied, wherein images may be treated, e.g., as additional input for generating further sentences, e.g., through alt text generation, and/or any form of image-to-text processing.

In the below, example embodiments of the invention will be described that illustrate the invention, without limiting the scope of the invention.

### Example 1: detection involving natural language input data

In this example according to embodiments of the invention, the characteristic that is to be detected is R&D activity. The method is intended for detecting characteristic physical data values, being sentences with a high characteristic score for the characteristic "R&D activity". To this end, a transformer model, particularly a BERT model, is trained with training data relating to R&D activity. In several example set-ups, a pre-trained BERT model is experimentally evaluated, and fine-tuning is considered as well.

The detection concerns a website classifier, whereby R&D activity is to be evaluated for a website as a whole. The website classifier thereby advantageously relies on a sentence encoding approach, wherein the evaluation of the website is derived from the encoding of the sentences that together define the contents of the website. Given this approach, sentence encoding is the key enabler for website classification.

In variants of this example, the website to be classified comprises one or more images in addition to sentences. In other variants, the website consists exclusively of images. For such examples, a sentence encoding approach can equally be applied, wherein images may be treated in a variety of ways, e.g., as additional input for generating further sentences, e.g., through alt text generation, or with direct encoding, with a ViT.

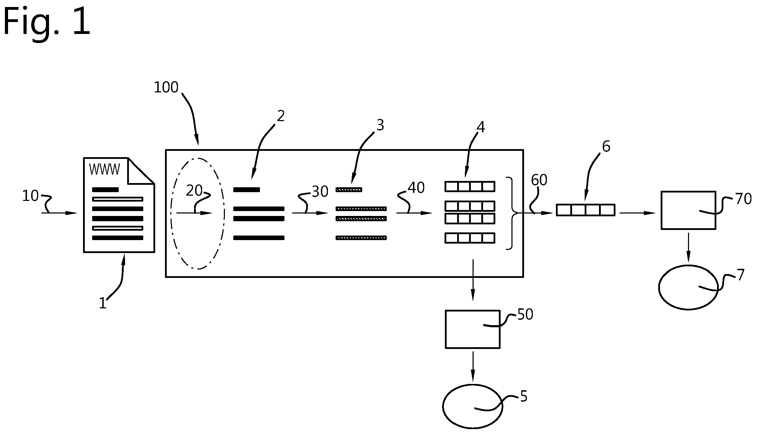

Fig. 1 shows an example method according to the invention. A first method step is receiving 10 physical entity data 1. This relates to taking in crawled website content as an input. The physical entity data is received in the form of a URL that relates to a website, the URL comprising a top-level domain and a second-level domain. The physical entity data is automatically extracted from said website, including automatically detected subdomains and subdirectories.

After the receiving, the data preparation 100 starts. The data preparation takes in physical entity data 1 as input and yields numerical vectors 4 as output.

As part of the data preparation 100, a first method step is extracting 20 at least two respective physical data values from the physical entity data 1. This relates to partitioning the website data into sentences and omitting irrelevant words and sentences such as default headers and html-related programming language. This may further relate to applying relevant keywords and inversed index filtering. The output of this step is a set of relevant sentences 2.

A next method step is cleaning 30 the sentences, which is a form of processing the extracted physical data values. The output of this step are cleaned relevant sentences 3.

The next method step is tokenizing (not shown), with BERT tokenization, the cleaned relevant sentences 3, and calculating 40, with BERT encoding involving a transformer neural network, the respective numerical vectors 4. The vectors are arrays of real values and have equal length. Example lengths that may provide a good trade-off between accuracy and speed are 512 and 768.

The next method step is determining 50 respective characteristic scores based on the respective numerical vectors. This is done through a trained sentence classifier using a XGBoost gradient boosting algorithm and hyperparameter tuning.

The next method step is selecting (not shown) characteristic physical data values from said respective physical data values, the selection being based on their respective characteristic scores. This yields a sentence result 5.

The sentence result 5 comprises the respective characteristic physical data values, i.e. the characteristic sentences, which score highest, and are hence characteristic of R&D activity. The sentence result 5 further comprises, for each of the characteristic sentences, their respective characteristic scores.

Additionally, in this example, the method also has steps relating to global scoring. The method step is determining 60 a global numerical vector based on the respective numerical vectors 4. This is directly based on the respective numerical vectors. Particularly, it is an arithmetic mean, with calculation of mean values for each of the real values of corresponding index positions of the numerical vectors of the characteristic sentences. However, any form of mean pooling may be applied, as well as other forms, such as max pooling. This yields the global numerical vector 6.

The next method step is calculating 70 a global score based on the global numerical vector 6. This is done through a trained website classifier, also using a XGBoost gradient boosting algorithm and hyperparameter tuning. This yields the global result 7, which is the global score of the website, indicating to what extent the website is characterized by R&D.

The final method step is returning the result, which comprises, in this example, both the sentence result 5 and the global result 7.

While the above presumes only sentences are extracted, in a variant example, also some images are extracted in the step of extracting 20. These respective images may then be processed, e.g., by performing alt text generation, and adding the respective generated text strings to the pool of respective relevant sentences 2. Thereby, all further steps 30, 40, 60 leading to the sentence result 5 and global result 7 may be essentially the same as without extraction of images.

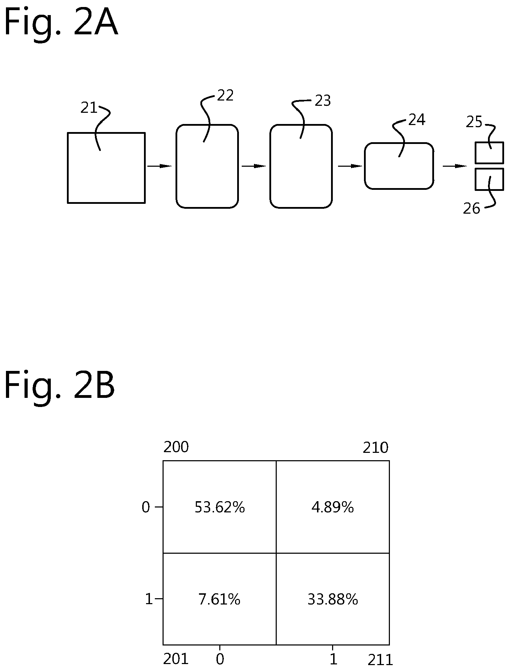

Fig. 2A-B show a first example set-up illustrating the invention. Thereby, Fig. 2A illustrates a first example method set-up, and Fig. 2B shows experimental results obtained therewith. The input considered is a sentence 21 that is fed to a BERT tokenizer 22. The output of the BERT tokenizer is fed to a pre-trained BERT model 23 which may be trained beforehand or be trained by a third party. The output thereof is fed to a trained XGBoost classifier 24. This leads to a binary label, being the answer, "yes" 25 or "no" 26, to the question whether the input sentence relates to R&D.

This example method set-up considers over a million sentences for training, collected from a plurality of websites to be classified. Every sentence is encoded using a specific variant comprised in the BERT model category, namely SBERT. The XGBoost classifier 24 is provided with hyperparameter tuning. The experimental results are shown in Fig. 2B, where the horizontal axis represents the predicted label, and the vertical axis represents the true label, according to binary indications, leading to four quadrants 200, 210, 201, 211. The overall accuracy, on an example benchmark set, is 87.50%, the precision 87.38%, the recall 81.66% and the F1 score 84.42%.

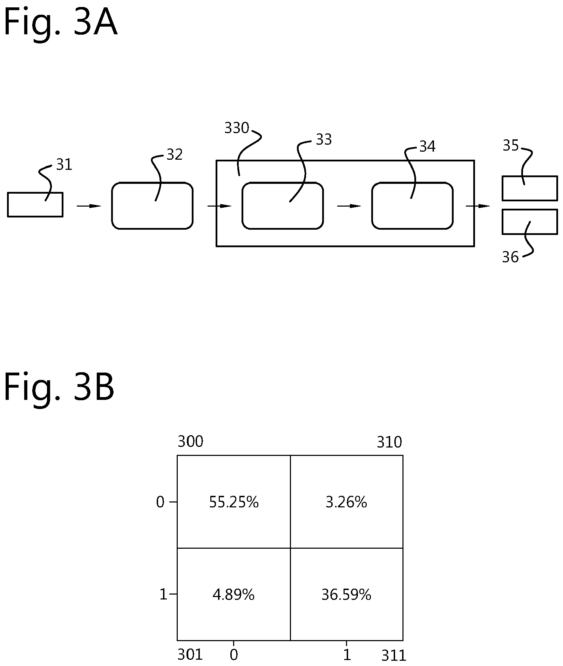

Fig. 3A-B and 4A-B show a second example set-up illustrating the invention. Thereby, Fig. 3A illustrates a second example set-up, and Fig. 3B shows experimental results obtained therewith. The input considered is a sentence 31 that is fed to a BERT tokenizer 32. The output of the BERT tokenizer is fed to a BERT model with finetuning 330. Thereby, the first step is a multilingual BERT encoder 33 with twelve layers. The output thereof is fed to a trained classifier 34. This leads to a binary label, being the answer, "R&D" 35 or "not R&D" 36, to the question whether the input sentence relates to R&D.

The finetuning of the pretrained BERT model is performed with TensorFlow and is based on transfer learning, with follow layers:
- The first layer is an input layer and takes plain text as input.
- The second layer is for pre-processing, it prepares the text to be used for BERT format.
- The third layer is the BERT model that encodes the text into meaningful vectors for the machine learning model.
- The fourth layer is the Dropout layer, it randomly sets input units to 0 with a frequency of rate at each step during training time, which helps prevent overfitting.
- The fifth layer is the final one, and it takes the value of the previous layer. It contains one neuron to make a binary classification: either the sentence is R&D, or not.

For fine-tuning, the same optimizer is used that BERT was originally trained with: the "Adaptive Moments" (Adam). This optimizer minimizes the prediction loss and does regularization by weight decay (not using moments), which is also known as AdamW.

The experimental results are shown in Fig. 3B, where the horizontal axis represents the predicted label, and the vertical axis represents the true label, according to binary indications, leading to four quadrants 300, 310, 301, 311. The overall accuracy is 91.85%, the precision 91.82%, the recall 88.21% and the F1 score 89.98%. The second set-up hence outperforms the first set-up, owing to the fine-tuning.

### Example 2: detection involving image input data

Example 2 is essentially the same as Example 1, except that the physical data values are not related to words, sentences, and paragraphs, but instead all are images. The physical entity data is hence a collection of images. This may relate to a folder with image files but may also relate to a website containing text and images, whereby only the images are extracted. In example embodiments, only the pixel data of images is used, and relevant sentences 2, as shown in Fig. 1, are obtained through alt text generation using ViT applied on the images. In other example embodiments, the sentences are further "enriched" with data that relates to the images. Thereby, the partitioning may comprise detecting a relation between an image and a portion of text for extracting an image-text combination, such as a caption, whereby the caption may be a relevant stand-alone sentence, or may preferably be combined with the text string generated through alt text generation, to obtain an enriched sentence. Likewise, metadata of said image such as EXIF information or file date or file name may be used to enrich the relevant sentence associated with the image. This may be particularly advantageous in applications where the characteristic relates to a location, e.g., a location where R&D is performed, or to a time and location, as is the case for, e.g., security camera images.

### (end of Example 2)

In the above, several examples are given wherein the physical data values relate to text or images. However, the physical data values may be any or any combination of text data and media data, such as text strings, movies, audio data of movies, video data of movies, audio data of audio recordings, and text strings extracted from media by a media-to-text operation such as alt text generation.

## Claims

1. A computer-implemented method for detecting characteristic physical data values, the method comprising the steps of:
- receiving physical entity data;
- extracting at least two respective physical data values from the physical entity data;
- determining respective numerical vectors of the respective physical data values by means of a trained neural network;
- determining respective characteristic scores based on the respective numerical vectors;
- selecting characteristic physical data values from said respective physical data values, the selection being based on their respective characteristic scores;
- returning a result comprising said respective characteristic physical data values, preferably along with their respective characteristic scores;
wherein said extracting comprises partitioning the physical entity data into the respective physical data values.

2. Method of claim 1, wherein the physical entity data is received in the form of a URL that relates to a website, the URL comprising at least a top-level domain and a second-level domain, and wherein said at least two respective physical data values are automatically extracted from said website.

3. Method of claim 2, wherein the number of respective extracted physical data values is at least ten, and wherein the physical data values are automatically extracted from a subdomain **and/or** from a subdirectory based on the top-level domain and the second-level domain.

4. Method of claim 3, wherein at least one of the extracted physical data values comprises a sentence present as first partition in the physical entity data; said at least one extracted physical data value being associated with a numerical vector determined based on said sentence; and wherein at least another one of the extracted physical data values comprises a media file, preferably an image, present as second partition in the physical entity data; said at least another one being associated with a numerical vector determined based on a text string obtained by processing said media file with a media-to-text operation, preferably by processing said image with automated alt text generation.

5. Method of claims 1-4, further comprising the steps of:
- determining a global numerical vector based on the respective numerical vectors, preferably directly based on the respective numerical vectors;
- calculating a global score based on the global numerical vector;
wherein said result further comprises the global score.

6. Method of claim 5, wherein the method is applied to each of said physical entity data and second physical entity data, and wherein the method comprises the further step of:
- selecting one of said physical entity data and said second physical entity data based on the global score of said physical entity data and a second global score of said second physical entity data.

7. Method of claims 1-6, wherein the determining of the respective numerical vectors comprises the sub-steps of:
- processing the respective physical data values; and
- calculating, based on the respective processed physical data values, the respective numerical vectors;
wherein, for at least one of the physical data values, the processing comprises at least one, preferably all, of: tokenizing at least one word comprised in the physical data value into syllables; applying a media-to-text operation to at least one media portion comprised in the physical data value.

8. Method of claim 7, wherein the respective physical data values concern respective images; wherein said processing comprises, for each image:
- alt text generation, for obtaining respective text strings, wherein the calculating of the respective numerical vectors is based on said respective text strings; **and/or**
- applying a ViT, for calculating the respective numerical vectors directly.

9. Method of claims 1-8, wherein said determining of respective numerical vectors by means of said neural network, preferably said calculating of numerical vectors, comprises applying a sentence encoder, preferably SBERT, to respective text strings based on the respective physical data values, preferably the respective processed physical data values.

10. Method of claim 9, wherein said determining of the numerical vectors comprises the substeps of:
- tokenizing, with BERT tokenization, the respective text strings obtained from respective physical data values, preferably processed physical data values;
- calculating, with BERT encoding, based on the respective tokenized physical data values, the respective numerical vectors.

11. Method of claims 1-10, wherein said determining of the respective characteristic scores based on the respective numerical vectors, preferably said determining of the respective characteristic scores and the global score, involves a trained classifier applying a gradient boosting algorithm, preferably a combination of XGBoost and hyperparameter tuning.

12. Method of claims 1-11, further comprising the step of:
- generating a graphical representation of said result, said graphical representation displaying the characteristic physical data values and a mark-up, preferably a highlighting and/or a heatmap, wherein color and/or highlighting is indicative of a weight of respective data portions of a physical data value to the characteristic score of said physical data value;
- preferably, displaying said graphical representation on a graphical user interface.

13. Device comprising a processor and memory comprising instructions which, when executed by said processor, cause the device to execute the method according to claims 1-12.

14. System comprising the device of claim 13 and a user device comprising a display and connected to said device,
wherein said device is further configured to:
- receiving, from the user device, the physical entity data and/or an identification of the physical entity data, preferably a URL;
- retrieving, if not received already, through downloading and/or web crawling, the physical entity data associated with said identification;
- sending the result, preferably comprising a graphical representation, to the user device; and
wherein said user device is configured to:
- sending, to the device, said identification of the physical entity data, preferably the URL;
- receiving, from the device, said result;
- displaying said result on said display.

15. Computer program product for carrying out a computer-implemented method according to claims 1-12, which computer program product comprises at least one readable medium in which computer-readable program code portions are saved, which program code portions comprise instructions for carrying out said method.
